# EUROPÄISCHE PATENTSCHRIFT

(11) **EP 2 623 940 B1**
(45) Veröffentlichungstag und Bekanntmachung des Hinweises auf die Patenterteilung: **06.04.2016**
(21) Anmeldenummer: 13000046.6
(22) Anmeldetag: 07.01.2013
(51) Int. Cl.: G01D 18/00

(54) **Prüfung einer Messgerätanordnung, entsprechende Messgerätanordnung und Prüfanordnung**
Testing of a measurement device assembly, corresponding measurement device assembly and test assembly
Vérification d'un agencement d'appareil de mesure, agencement d'appareil de mesure correspondant et agencement de vérification

(30) Priorität: 03.02.2012 DE 102012002013
(43) Veröffentlichungstag der Anmeldung: 07.08.2013
(73) Patentinhaber: Krohne Messtechnik GmbH, 47058 Duisburg (DE)
(72) Erfinder: Brockhaus, Helmut, 46145 Oberhausen (DE)
(74) Vertreter: Gesthuysen Patent- und Rechtsanwälte

(56) Entgegenhaltungen:
- EP-A1- 1 584 902
- WO-A1-2008/031376
- DE-A1- 10 131 760
- DE-A1- 10 231 180
- DE-A1- 19 845 185

## Beschreibung

Die Erfindung betrifft ein Verfahren zum Prüfen einer Messgerätanordnung, die mindestens ein Messgerät umfasst. Das Messgerät erzeugt dabei ausgehend von der Bestimmung mindestens einer Messgröße mindestens ein von einer Abgreifstelle als Abgriffsignal abgreifbares Ausgangssignal. Die Erfindung betrifft ferner eine Messgerätanordnung mit mindestens einem Messgerät und einer Abgreifstelle. Weiterhin betrifft die Erfindung eine Prüfanordnung zum Prüfen einer Messgerätanordnung.

In der modernen Prozessautomatisierung kommt der Sicherheit der Steuerung oder Regelung von Prozessen und der Zuverlässigkeit der dafür verwendeten Feldgeräte (z. B. Sensoren zur Bestimmung und/oder Überwachung von Mess- bzw. Prozessgrößen oder Aktoren zur Steuerung oder Regelung von Prozessen) eine hohe und zunehmende Bedeutung zu. Insbesondere bei sicherheitskritischen Anwendungen ist es erforderlich, dass die Mess- oder Anzeigegeräte die richtigen, d. h. zum überwachten Zustand passenden Ausgangssignale erzeugen und dass diese Ausgangssignale richtig in den nach-oder übergeordneten Einheiten verarbeitet werden.

Um Aussagen über die Zuverlässigkeit bzw. Sicherheit von Geräten der Prozessautomatisierung machen zu können, werden daher Funktionstests oder Überprüfungen von einzelnen Komponenten oder von gesamten Anlagen durchgeführt. Eine Möglichkeit besteht darin, unterschiedliche Zustände des Systems, das von den Feldgeräten überwacht und beispielsweise auch gesteuert wird, anzufahren und die von den Messgeräten erzeugten Signale auszuwerten. So werden beispielsweise Tanks, in denen die Füllstände von Medien überwacht werden sollen, während einer Funktionsprüfung befüllt bzw. entleert. Zum einen ist dies teilweise sehr aufwändig. Zum anderen ist es nicht immer möglich bzw. muss es u. U. sogar verhindert werden, dass besondere Zustände des zu überwachenden Systems vorliegen. Ist es beispielsweise zwingend erforderlich, dass das Überfüllen eines Behälters mit einer gefährlichen Substanz erkannt bzw. verhindert wird, kann dieser Zustand nicht testweise angefahren werden. Daher wird bei Tests vorzugsweise das Vorliegen von Zuständen bzw. damit verbundenen Werten der Messgrößen simuliert, indem beispielsweise entsprechende Signale in die Feldgeräte eingespeist werden.

Die WO 2010/006897 A1 beschreibt ein Verfahren zur Überprüfung von Feldgeräten und setzt sich dabei mit der Problematik auseinander, dass die während des Funktionstests der Messgeräte erzeugten Ausgangssignale nicht die realen Messwerte widerspiegeln. Daher wird ein Test der Messgeräte in dem Zeitraum durchgeführt, in dem die Messgrößen feste und bekannte Werte aufweisen. Vorzugsweise geschieht dies zu der Zeit, zu der auch ein Test der den Messgeräten nachgeordneten Einheiten bzw. der gesamten Anlage erfolgt. Es wird also der Zeitraum für den Test verwendet, in dem keine Messung erforderlich ist, weil bekannt ist, dass die Messgröße sich nicht ändert bzw. weil eine wirkliche Auswertung der Messsignale bedingt durch den Test der übergeordneten Einheiten nicht erfolgt. Nachteilig daran ist, dass keine inline-Messung, also keine Messung während des Prozessbetriebes, möglich ist, da für die Prüfung die eigentliche Messung unterbleibt bzw. unterbrochen wird.

In der US 5,481,200 wird der Ausgang eines mit einer Zweidraht-Stromschleife verbundenen Feldgerätes überwacht, indem der Schleifenwiderstand durch das Schalten von zwei unterschiedlichen Strömen in der Stromschleife ermittelt wird. Hiermit sollen Fehler des Feldgerätes bzw. speziell des Signalausgangs erkannt werden. Nachteilig daran ist, dass durch das Schalten von unterschiedlichen Strömen das Übertragen des dem Messwert zugehörigen Stromwerts nicht erfolgen kann, d. h. die Ausgabe des eigentlichen Messwerts unterbleibt.

In der US 2011/0148431 A1 wird beschrieben, wie ein Stromwandler als Teil beispielsweise eines Messgerätes überwacht werden kann. Hierfür wird ein Testsignal auf den Eingang des Stromwandlers gegeben und das Ausgangssignal wird mit einem Sollsignal verglichen. Nachteilig daran ist, dass ebenfalls ein Testzustand herbeigeführt wird, der ein Funktionieren des zu testenden Objekts verhindert.

Der Erfindung liegt daher die Aufgabe zugrunde, ein Verfahren zur Überwachung einer Messgerätanordnung - und neben einer entsprechenden Messgerätanordnung auch eine Prüfanordnung - anzugeben, das eine inline-Prüfung ohne die Unterbrechung der Messung bzw. der Übermittlung der Messwerte darstellt.

Das erfindungsgemäße Verfahren, bei dem die zuvor hergeleitete und aufgezeigte Aufgabe gelöst ist, ist zunächst und im Wesentlichen durch folgende Schritte gekennzeichnet: in einem Schritt wird derartig auf das Messgerät eingewirkt, dass das Messgerät ein Testsignal als Ausgangssignal erzeugt. In einem weiteren Schritt werden/wird das Ausgangssignal und/oder ein davon abhängiges Signal derartig beeinflusst, dass das Abgriffsignal ein vorgebbares Einstellsignal ist. In der Messgerätanordnung erzeugt das Messgerät im Normalfall, d. h. im Falle der Abwesenheit einer Überprüfung des Messgerätes ausgehend von der Messung der zu messenden und/oder zu überwachenden Messgröße ein Messsignal und gibt dies als Ausgangssignal beispielsweise über einen Signalausgang aus. Das Ausgangssignal wird anschließend von einer Abgreifstelle abgegriffen und als Abgriffsignal beispielsweise an eine übergeordnete Einheit übergeben.

In einem einfachen Fall gibt das Messgerät sein Ausgangssignal auf eine mit dem Messgerät verbundene Zweidraht-Leitung aus, von der das Ausgangssignal als Abgriffsignal wieder abgreifbar ist. Im erfindungsgemäßen Verfahren wird bei einer Prüfung das Messgerät derartig angesteuert, dass das Ausgangssignal ein Testsignal ist. Das Testsignal kann dabei ein vorgegebenes Signal sein, wie es beispielsweise das Ausgangssignal beim Vorliegen eines bestimmten, aber - vorzugsweise - nicht aktuellen Wertes der zu messenden Messgröße wäre. In einer anderen Ausgestaltung kann das Testsignal das Signal sein, das das Messgerät ausgehend von einem simulierten Wert der Messgröße selbst erzeugt bzw. aus der Messgröße ableitet. In der ersten Variante wird beispielsweise während der Prüfung des Messgerätes direkt ein Signal als Testsignal auf den Signalausgang des Messgerätes gegeben, während in der zweiten Variante eine Messgröße vorgegeben bzw. simuliert wird und das Messgerät aus der simulierten Messgröße ein Testsignal als Ausgangssignal erzeugt. Die beschriebenen Varianten unterscheiden sich insbesondere darin, bis zu welcher Tiefe das Messgerät überprüft wird: entweder im Wesentlichen nur der Bereich der Signalausgabe oder auch die Komponenten, die aus der eigentlichen Messgröße das Ausgangssignal erzeugen. Weiterhin wird im erfindungsgemäßen Verfahren beispielsweise auf den Signalweg, den das Test- bzw. Ausgangssignal nimmt, derartig eingewirkt, dass an einer Abgreifstelle ein wiederum vorgebbares Einstellsignal als Abgriffsignal anliegt. An der Abgreifstelle lässt sich im Normalbetrieb ein Abgriffsignal abgreifen, das sich aus dem eigentlichen Messsignal ergibt. Im erfindungsgemäßen Verfahren wird jedoch das Ausgangssignal und/oder ein vom Ausgangssignal abhängiges Signal derartig beeinflusst, dass das Abgriffsignal ein vorgebbares Einstellsignal ist, das insbesondere unterschiedlich zu dem Signal ist, als das das Testsignal abgreifbar wäre. Bei der Prüfung des Messgerätes erfolgt also an mindestens zwei Stellen ein Eingriff: einmal in Bezug auf das Ausgangssignal und einmal in Bezug auf den weiteren Weg des Ausgangssignals. Insbesondere der zweite Eingriff, d. h. das Einwirken auf das Ausgangssignal, erlaubt es, die Anbindung des Messgeräts an nach- oder übergeordnete Einheiten zu beeinflussen und dadurch auch die Wirkung des Messgerätes auf diese Einheiten zu bestimmen. Im erfindungsgemäßen Verfahren wird nicht nur durch ein Einwirken auf das Messgerät ein Testsignal erzeugt, sondern es wird auch darauf eingewirkt, als welches Signal das Testsignal abgegriffen wird.

In einer vorteilhaften Ausgestaltung des erfindungsgemäßen Verfahrens wird vor und/oder während des Einwirkens auf das Messgerät, d. h. vor und/oder während der Überprüfung des Messgerätes ein aktueller Wert der Messgröße bestimmt und ein Messsignal erzeugt. In dieser Ausgestaltung wird vor oder sogar noch während der Überprüfung des Messgerätes die Messgröße gemessen und ein entsprechendes Messsignal erzeugt. In einer damit einhergehenden, sehr vorteilhaften Variante ist vorgesehen, dass das Ausgangssignal und/oder ein davon abhängiges Signal derartig beeinflusst werden/wird, dass das Abgriffsignal im Wesentlichen gleich dem Messsignal ist. In dieser Ausgestaltung wird auf das Ausgangssignal, das das Testsignal ist, bzw. auf ein vom Ausgangssignal abhängiges Signal - falls beispielsweise das Ausgangssignal einer weiteren Umwandlung unterzogen wird und an der Abgreifstelle das umgewandelte Ausgangssignal abgreifbar ist - derartig eingewirkt, dass das Abgriffsignal dem Messsignal entspricht. Unterscheidet sich das Testsignal vom eigentlichen Messsignal, so wird im erfindungsgemäßen Verfahren gemäß dieser Ausgestaltung das Maß des Unterschiedes zwischen Testsignal und Messsignal so korrigiert, dass sich das eigentliche Messsignal als Abgriffsignal abgreifen und auch beispielsweise einer übergeordneten Einheit zur Verfügung stellen lässt. Insgesamt erlaubt die Ausgestaltung eine Überprüfung des Messgerätes, ohne dass dies zu einer Unterbrechung der Messung bzw. der Kommunikation der Messwerte führt, es ist also eine inlineÜberprüfung des Messgeräts möglich.

In einer alternativen Ausgestaltung ist vorgesehen, dass das Ausgangssignal und/oder ein davon abhängiges Signal derartig beeinflusst werden/wird, dass das Abgriffsignal während eines vorgebbaren Prüfzeitraums im Wesentlichen gleich einem vorgebbaren konstanten Wert ist. In dieser Variante hat das Abgriffsignal einen vorgebbaren konstanten Wert.

Eine Ausgestaltung besteht darin, dass über ein Steuerelement das Ausgangssignal und/oder ein davon abhängiges Signal beeinflusst werden/wird. In einer Ausgestaltung handelt es sich bei dem Steuerelement um ein im Wesentlichen durch einen elektrischen Widerstand gekennzeichnetes Bauteil. Ein Beispiel hierfür ist ein elektrisches Widerstandselement. Für die Beeinflussung des Ausgangssignals und/oder eines davon abhängigen Signals wird dabei beispielsweise eine elektrische Spannung verändert, die an dem Steuerelement anliegt. In Abhängigkeit vom Widerstandswert des Steuerelements ergibt sich jeweils ein Strom, der - insbesondere durch die Art der Beschaltung und Anordnung des Steuerelements vor der Abgreifstelle - sich entsprechend auf das Abgriffsignal auswirkt.

Die zuvor hergeleitete und aufgezeigte Aufgabe ist nach einer weiteren Lehre bei der eingangs genannten Messgerätanordnung dadurch gelöst, dass mindestens ein Steuerelement vorgesehen ist, und dass das von der Abgreifstelle abgreifbare Abgriffsignal abhängig von dem Steuerelement ist. Die Messanordnung verfügt über ein Messgerät, das ausgehend von der Bestimmung mindestens einer Messgröße ein Ausgangssignal erzeugt, und über eine Abgreifstelle, an der das Ausgangssignal - oder ggf. ein wiederum davon abhängiges Signal - als Abgriffsignal abgreifbar ist. Für die Durchführung einer Prüfung - insbesondere nach dem zuvor beschriebenen erfindungsgemäßen Verfahren - verfügt das Messgerät vorzugsweise auch über einen Steuerungseingang, über den es ermöglicht ist, das Testsignal als Ausgangssignal zu erzeugen. Zusätzlich ist in der Messgerätanordnung vor bzw. bei der Abgreifstelle ein Steuerelement vorgesehen, durch das das vorgebbare Abgriffsignal erzeugbar ist. Hierbei sei auf die obigen Ausführungen zum erfindungsgemäßen Verfahren hingewiesen, die sich hier auch auf die Messgerätanordnung beziehen.

In einer vorteilhaften Ausgestaltung ist vorgesehen, dass das Steuerelement ein Bestandteil des Messgeräts ist, und dass das Messgerät mindestens einen Stecker zum Anschließen eines Prüfgerätes aufweist. In dieser Ausgestaltung ergibt sich ein kompakter Aufbau, indem das Steuerelement Teil des Messgerätes ist, d. h. das Messgerät weist bereits ein Steuerelement auf. Für die Prüfung des Messgerätes ist insbesondere in dieser Ausgestaltung auch vorgesehen, dass von außerhalb des Messgerätes beispielsweise ein Prüfgerät auf das Steuerelement einwirkt. Für die Kontaktierung ist dabei insbesondere ein entsprechender (Prüf-)Stecker vorgesehen, über den das Prüfgerät an das Messgerät für den Test anschließbar ist. Der Stecker für das Prüfgerät ist vorzugsweise zusätzlich zu den normalen, für den Betrieb des Messgerätes erforderlichen Anschlüssen des Messgerätes ausgestaltet, so dass ein Test bzw. ein Anschließen des Prüfgerätes keine Auswirkungen auf die eigentliche Kontaktierung des Messgerätes hat. Durch eine solche Steckerlösung stellt sich insgesamt der große Vorteil ein, dass ein Test des Messgerätes keine Unterbrechung der Kontaktierung des Messgerätes und keine Unterbrechung der Bereitstellung eines Messwertes durch das Messgerät darstellt. Die Durchführung einer Prüfung des Messgerätes gestaltet sich insgesamt beispielsweise wie folgt: Das Prüfgerät wird über den Stecker des Messgerätes angeschlossen. Die anderen Kontaktierungen des Messgerätes sind davon nicht betroffen. Dann wird die Prüfung gestartet, wobei das Abgriffsignal durch das Prüfgerät passend eingestellt wird. Anschließend wird das Prüfgerät wieder abgezogen und das Messgerät ist weiterhin im betriebsgemäßen Zustand. In dem Messgerät wird ein Testsignal als Ausgangssignal erzeugt, und über das Steuerelement wird dafür gesorgt, dass ein vorgebbares Einstellsignal als Abgriffsignal an der Abgreifstelle abgegriffen wird. Bei der Abgreifstelle handelt es sich dabei vorzugsweise in dieser Ausgestaltung um den Signalausgang des Messgerätes selbst. Das Messgerät zeichnet sich insgesamt dadurch aus, dass es nicht nur ein Ausgangssignal erzeugt, sondern dass es auch durch ein ihm zugehöriges Steuerelement möglich ist, das Ausgangssignal für den Abgriff an der Abgreifstelle zu beeinflussen. Es ergeben sich quasi - bei einer abstrakten Betrachtung - zwei hintereinander angeordnete Ausgänge für Signale im Messgerät selbst: ein Ausgang für das Ausgangssignal - dieser Ausgang ist nur intern - und ein Ausgang als Abgreifstelle für das Abgriffsignal - dies dann ein normaler und üblicher Signalausgang des Messgerätes -, wobei zwischen den zwei "Ausgängen" im Messgerät das Steuerelement angeordnet ist.

In einer alternativen Ausgestaltung weist das Messgerät einen Signalausgang zur Ausgabe des Ausgangssignals auf und das Steuerelement ist dem Signalausgang als separates Bauteil nachgeordnet. In dieser Ausgestaltung benötigt das Messgerät nur einen Steuerungseingang zum Einwirken auf das Ausgangssignal und den Signalausgang. Die "Kompensation" des Ausgangssignals erfolgt in dieser Ausgestaltung über ein externes Steuerelement, das prinzipiell an jedes beliebige Messgerät gemäß dem Stand der Technik anschließbar ist. Diese Ausgestaltung hat daher den Vorteil, dass die Anforderungen an die eigentlichen Messgeräte bzw. die Erfordernisse an Umgestaltungen von bestehenden Messgeräten gering bleiben.

Die zuvor hergeleitete und aufgezeigte Aufgabe ist nach einer weiteren Lehre bei der eingangs genannten Prüfanordnung zum Prüfen einer Messgerätanordnung dadurch gelöst, dass mindestens ein Prüfgerät und ein Steuerelement vorgesehen sind. Das Prüfgerät dient dabei dem Prüfen des Messgerätes, das ausgehend von der Bestimmung mindestens einer Messgröße ein von einer Abgreifstelle als Abgriffsignal abgreifbares Ausgangssignal erzeugt. Das Steuerelement beeinflusst das Ausgangssignal - also das Test-signal - und/oder ein von dem Ausgangssignal abhängiges Signal. Weiterhin sind das Prüfgerät und das Steuerelement derartig ausgestaltet und aufeinander abgestimmt, dass durch ein Einstellen des Prüfgeräts über das Steuerelement das Abgriffsignal einem vorgebbaren Einstellsignal entspricht. Das Besondere des Prüfgeräts besteht darin, dass nicht nur ein Testsignal erzeugt wird, sondern dass auch das nachgeordnete "Schicksal" des Testsignals beeinflusst und ein vorgebbares Abgriffsignal erzeugt wird.

Die obigen Ausführungen über das erfindungsgemäße Verfahren und die entsprechende Messgerätanordnung gelten entsprechend auch hier bei der Prüfanordnung. Die Prüfanordnung erschafft eine Umgebung, in der ein Test eines Messgerätes durchgeführt wird, ohne dass es dabei zu Unterbrechungen des eigentlichen Messprozesses bzw. der Übertragung der Messdaten kommt, indem das Ausgangssignal nicht direkt als Abgriffsignal abgreifbar ist, sondern in dem es passend verändert wird. Durch das Korrigieren des Testsignals werden die Auswirkungen eines Tests nach außen, d. h. auf den an das Messgerät bzgl. der Signale angrenzenden Bereich verringert bzw. aufgehoben. Das Prüfgerät hat dabei die Besonderheit, dass es nicht nur auf das Messgerät einwirkt, sondern auch den weiteren Verlauf des vom Messgerät erzeugten Ausgangssignals beeinflusst. Hierfür kann das Prüfgerät sich auch aus mehreren getrennten Einheiten oder Elementen zusammensetzen.

Im Einzelnen gibt es eine Vielzahl von Möglichkeiten, das erfindungsgemäße Verfahren, die Messgerätanordnung und die Prüfanordnung auszugestalten und weiterzubilden. Dazu wird verwiesen einerseits auf die Patentansprüche, andererseits auf die folgende Beschreibung von Beispielen in Verbindung mit der Zeichnung. In der Zeichnung zeigen
- Fig. 1: eine schematische, im Wesentlichen die funktionalen Wirkzusammenhänge anhand eines Blockschaltbilds verdeutlichende Darstellung einer Messgerätanordnung gemäß einer ersten Variante,
- Fig. 2: eine schematische, im Wesentlichen die funktionalen Wirkzusammenhänge anhand eines Blockschaltbilds verdeutlichende Darstellung einer Messgerätanordnung gemäß einer zweiten Variante,
- Fig. 3: eine schematische Darstellung eines Bestandteils einer ersten Umsetzung der Messgerätanordnung der Fig. 1,
- Fig. 4: eine schematische Darstellung eines Bestandteils einer zweiten Umsetzung der Messgerätanordnung der Fig. 1,
- Fig. 5: eine schematische Darstellung eines Bestandteils einer dritten Umsetzung der Messgerätanordnung der Fig. 1,
- Fig. 6: eine schematische Darstellung eines Teils eines magnetischinduktiven Durchflussmessgeräts (MID) als Messgerät mit einer Schaltung zur Überprüfung des Messgerätes gemäß einer ersten Umsetzung,
- Fig. 7: eine schematische Darstellung eines Teils eines MIDs als Messgerät mit einer Schaltung zur Überprüfung des Messgerätes gemäß einer zweiten Umsetzung und
- Fig. 8: ein schematisches Flussdiagramm für eine exemplarische Ausgestaltung der Schritte des erfinderischen Verfahrens.

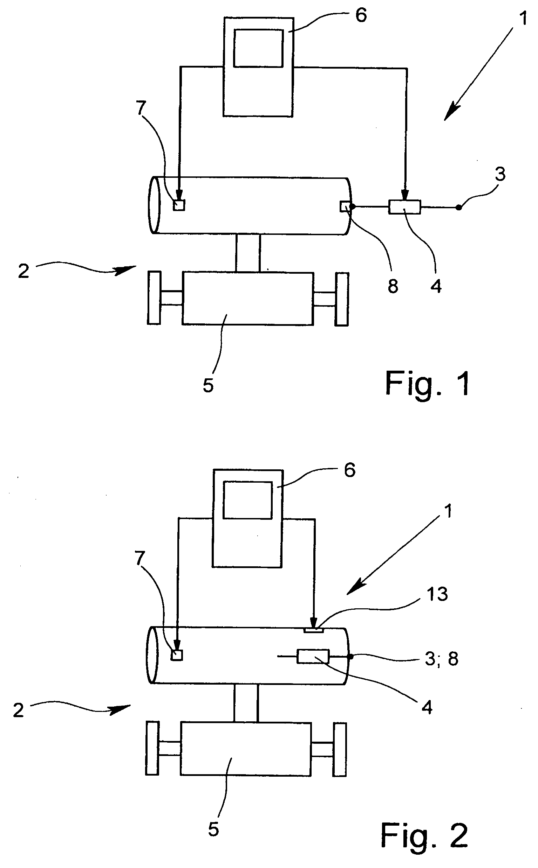

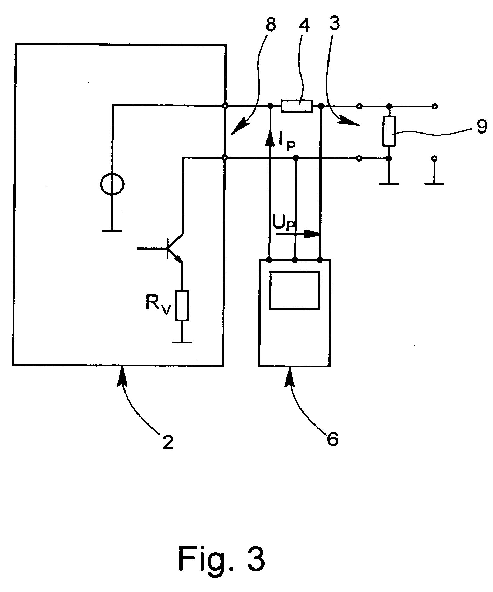

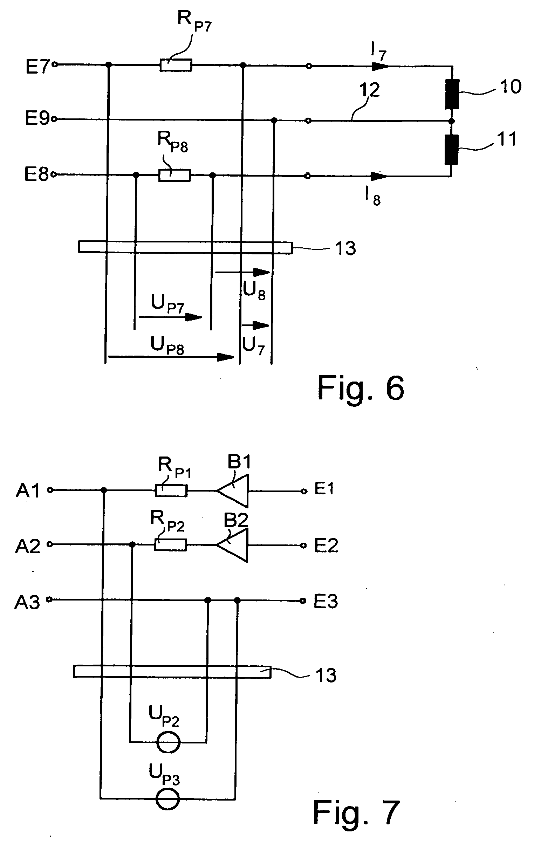

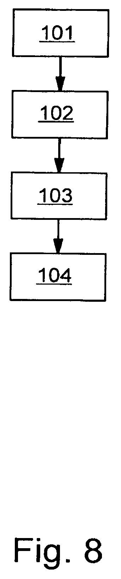

In den Fig. 1 und 2 sind jeweils verschiedene Ausführungsbeispiele einer Messgerätanordnung 1 dargestellt, wobei die Figuren keine Darstellungen im Sinne von korrekten elektrischen Schaltplänen sind, sondern vielmehr die Wirkzusammenhänge zwischen den verschiedenen Bestandteilen erkennbar werden lassen sollen. Die in der Fig. 3 bis 5 dargestellten, stark schematisierten Bestandteile möglicher Realisierungen einer Messgerätanordnung 1 gemäß Fig. 1 soll einige Details prinzipiell verdeutlichen. Die Ausschnitte von zwei schematischen Schaltungen zur Prüfung von Teilen eines MIDs als Beispiel eines Messgerätes zeigen die Fig. 6 und 7. Der Verlauf eines Ausführungsbeispiels des erfindungsgemäßen Verfahrens zur Prüfung einer wie in der Fig. 1 prinzipiell dargestellten Messgerätanordnung mit einer Prüfanordnung in der Fig. 8 beschreibt grundsätzlich einen Ablauf der Schritte, wobei eine andere Gruppierung oder eine andere Aufeinanderfolge ebenfalls möglich und im Rahmen der Erfindung ist.

Die Fig. 1 zeigt im Blockschaltbild eine Messgerätanordnung 1. Das Messgerät 2 ist hier über ein Steuerelement 4 mit einer Abgreifstelle 3 verbunden und verfügt über ein eigentliches Sensorelement 5, bei dem es sich hier beispielhaft um ein Durchflussmessgerät handelt. Das Sensorelement 5 erzeugt ein von der Messgröße - hier als Beispiel der Durchfluss eines Mediums - abhängiges Rohsignal, aus dem ein eigentliches Messsignal im Messgerät 2 generiert wird. Während der Prüfung wirkt das hier rein schematisch dargestellte Prüfgerät 6 über den Steuerungseingang 7 derartig auf das Messgerät 2 ein, dass ein Testsignal als Ausgangssignal am Signalausgang 8 des Messgerätes 2 anliegt. Das Testsignal kann dabei beispielsweise durch das Prüfgerät 6 vorgegeben sein oder es kann sich um das Signal handeln, das sich durch jeweilige Einwirkungen des Prüfgeräts 6 auf unterschiedliche Komponenten oder Funktionsblöcke das Messgerät 2 ergeben. In einer Variante wird vom Prüfgerät 6 ein vorgebbarer Wert der Messgröße simuliert, und das Testsignal ist das zugehörige Signal, das sich durch die Verarbeitung des Wertes der Messgröße im Messgerät 2 daraufhin ergibt. Vorzugsweise unterscheidet sich dabei der simulierte Wert der Messgröße vom realen Wert. Je nach Art des Einwirkens des Prüfgeräts 6 auf das Messgerät 2 lassen sich unterschiedliche Komponenten oder Funktionen des Messgeräts 2 testen. Das als Testsignal ausgestaltete Ausgangssignal des Messgerätes 2, das hier vom Signalausgang 8 abgreifbar ist, wird über das Steuerelement 4 derartig beeinflusst, dass sich an der Abgreifstelle 3 das vorgebbare Abgriffsignal ergibt. Dies wiederum in der hier gezeigten Ausgestaltung durch das Einwirken des Prüfgerätes 6. Das Prüfgerät 6 ist hier in der Fig. 1 als einteilig dargestellt, es kann sich jedoch auch um eine mehrteilige Anordnung von Einzelkomponenten handeln, die jeweils über einzelne Funktionalitäten verfügen. Das Prüfgerät 6 wirkt insgesamt auf das Messgerät 2 und auf den Signalweg nach dem Signalausgang 8 des Messgerätes 2 ein.

Die Variante der Messgerätanordnung 1 der Fig. 2 unterscheidet sich von der Variante der Fig. 1 in der Position des Steuerelements 4 bzw. in der Ausgestaltung des Messgerätes 2. In der Variante der Fig. 2 ist das Steuerelement 4 Bestandteil des Messgerätes 2 selbst, wobei sich in der Ausgestaltung der Fig. 2 damit auch ergibt, dass der Signalausgang 8 und die Abgreifstelle 3 zusammenfallen. In der gezeigten Ausgestaltung der Fig. 2 ist für das zweifache Einwirken des Prüfgerätes 6 dabei vorgesehen, dass das Prüfgerät 6 entsprechend weiterhin auf das Steuerelement 4 einwirkt, um das vorgegebene Abgriffsignal zu erzeugen. Dies geschieht beispielhaft über den Steuerungseingang 7 oder - wie im hier gezeigten Beispiel einer Ausgestaltung - über einen separaten Signal- bzw. Steuerungseingang des Messgerätes 2, der durch einen Stecker 13 des Messgerätes 2 zugänglich ist. Der Stecker 13 erlaubt dabei insbesondere die Durchführung der Prüfung, ohne die eigentlichen und für den Messbetrieb erforderlichen Kontaktierungen zu unterbrechen. Über das eingebaute Steuerelement 4 und die Verbindung über den Stecker 13 sind so eine Prüfungsmöglichkeit und in der Umsetzung der erfindungsgemäßen Prüfungsschritte eine Prüfung realisiert, die keine Auswirkungen auf die Messungen haben, die ohne Unterbrechung der Messung eingeleitet bzw. beendet werden können und die auch während der Prüfung das Funktionieren der das Messgerät 2 umgebenden Geräte oder Einheiten usw. nicht behindern. Für die Übersichtlichkeit sind in der Fig. 2 gleiche Elemente mit den gleichen Bezugszeichen wie in der Fig. 1 versehen. Die Prüfanordnung wird in den Ausgestaltungen der Fig. 1 und der Fig. 2 jeweils durch das Prüfgerät 6 und das Steuerelement 4 gebildet, wobei das Zusammenwirken von beiden die Umsetzung des erfindungsgemäßen Verfahrens erlaubt.

In der Fig. 3 ist ein Teil eines Messgerätes 2 und der angeschlossenen Elemente schematisch dargestellt. Das Messgerät 2 ist dabei als Beispiel am Signalausgang 8 zur Ausgabe der Ausgangssignale mit einem Zweidraht-Leiter verbunden. Als Ausgangssignal wird insbesondere ein 0...20 mA-Signal erzeugt. Dies geschieht hier über den regelbaren Widerstand R_{V}, der mit einer internen, d. h. zum Messgerät 2 gehörenden Spannungsquelle verbunden ist. Im Fall der Prüfung des Messgerätes 2 ergibt sich durch das Testsignal ein Wert des Stroms am Signalausgang 8, der sich insbesondere von dem Stromwert unterscheidet, der dem gemessenen Wert der Messgröße zugeordnet ist. Dem Signalausgang 8 nachgeordnet befindet sich das Steuerelement 4, bei dem es sich im hier dargestellten Beispiel um ein elektrisches Widerstandselement außerhalb des Messgerätes 2 handelt. Das Prüfgerät 6 steuert im Prüfungsfall über die Spannung Uₚ, die über dem als Widerstand ausgestalteten Steuerelement 4 abfällt, den Prüfstrom I_{P}, der sich zu dem Strom, der am Signalausgang 8 des Messgerätes 2 anliegt, hinzuaddiert. Durch die Einstellung der Spannung U_{P} und dem sich daraus ergebenden Prüfstrom I_{P} kann der Strom am Signalausgang 8 derartig korrigiert werden, dass sich an der Abgreifstelle 3 ein Strom ergibt, wie er dem gemessen Wert der Messgröße zugeordnet ist. Dadurch wird für die auf die Messanordnung folgenden Einheiten der Effekt des Testsignals wieder ausgeglichen und die Überprüfung führt nicht zu einer Unterbrechung des Messbetriebes. Der abgegriffene Strom als Abgriffsignal lässt sich dann beispielsweise über den Bürdenwiderstand 9, der der Abgreifstelle 3 in der Abbildung nachfolgt, ermitteln. Die Art der Auswertung des Abgriffsignals lässt sich dabei entsprechend den Varianten des Standes der Technik ausgestalten und richtet sich dabei insbesondere nach der Art des Signalausgangs 8 bzw. nach der Art des Ausgangssignals des Messgerätes 2.

Da das Prüfgerät 6 das Testsignal beeinflusst, erlaubt es eine Ausgestaltung des Prüfgeräts 6 bzw. der Prüfanordnung (zu denken ist z. B. an eine Art von Wheatstonescher Messbrücke), aus dem Maß für die Kompensation des Testsignals auf mögliche Fehler usw. im Messgerät 2 zu schliessen.

Das Steuerelement 4 wird insgesamt in dieser Ausgestaltung nur zwischen den Signalausgang 8 des Messgerätes 2 und die Abgreifstelle 3 eingeschoben. Vorzugsweise findet jedoch die Anbringung des Steuerelements 4 dauerhaft und fest statt, so dass für die Prüfung lediglich eine Kontaktierung durch das Prüfgerät erfolgen muss. Die Prüfung macht daher keine Aufhebung von Verbindungen erforderlich, die anschließend wieder geschlossen werden müssen, sondern es müssen im Wesentlichen nur das Messgerät 2 und das Steuerelement 4 kontaktiert werden.

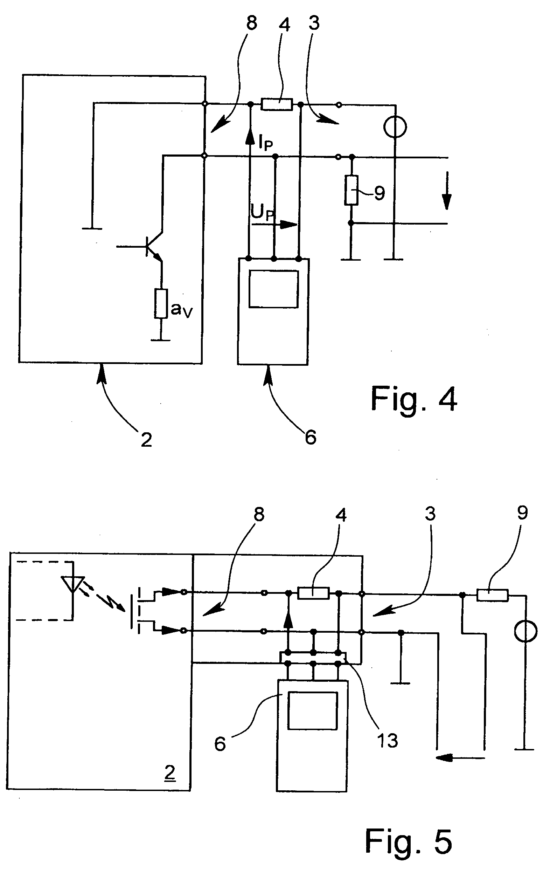

Die Schaltung der Fig. 4 unterscheidet sich von der der Fig. 3 darin, dass das Messgerät 2 der Variante der Fig. 4 keine eigene Spannungsquelle aufweist und der Signalausgang 8 daher beispielsweise auch der Stromversorgung des Messgerätes 2 dienen kann. Der passive Signalausgang der Ausgestaltung der Fig. 4 im Gegensatz zum aktiven Ausgang der Ausgestaltung der Fig. 3 erfordert auch eine andere Art der Signalauswertung auf der Seite der Prozessleitstelle. Dort ist in der dargestellten Ausgestaltung eine Spannungsquelle vorgesehen, die in diesem Beispiel konstant auf 24 V liegt. Die Spannung, die über den Bürdenwiderstand 9 gemessen wird (hier angedeutet durch die beiden Abgriffe und den Pfeil parallel zum Bürdenwiderstand 9), ist dann ein Maß für das Ausgangssignal des Messgerätes 2 und dadurch - bedingt durch die Kompensation des Ausgangssignals durch das Prüfgerät 6 - auch ein Maß für das Messsignal.

Die Ausgestaltung der Fig. 5 zeigt beispielhaft ein Messgerät 2 mit einem passiven Binärausgang für den Open-Kollektor-Betrieb. Die Größen des Ausgangssignals liegen dabei beispielsweise zwischen 0 mA und 150 mA bei einer Frequenz zwischen 1 Hz und 10 kHz. Dies macht - wie in der Ausgestaltung der Fig. 4 - auf der Auswerteseite der Prozessleitstelle die hier dargestellte Spannungsquelle erforderlich, die z. B. eine Spannung von 24 V erzeugt. Der gezeigte Abgriff zwischen dem mit Masse verbundenen unteren Kontakt der Abgreifstelle 3 und dem oberen Abgriff vor dem Bürdenwiderstand 9 liefert dann einen Spannungswert (wieder angedeutet durch den Pfeil), aus dem sich das durch das Steuerelement 4 bzw. das Prüfgerät 6 korrigierte Ausgangssignal des Messgerätes 2 als Abgriffsignal ergibt. Für die Verbindung des Prüfgerätes 6 mit dem Messgerät 2 ist hier ein Stecker 13 als Teil des Messgerätes 2 vorgesehen, über den das Prüfgerät 6 auf das Steuerelement 4 einwirkt. Das Steuerelement 4 ist hier weiterhin ein fester Bestandteil des Messgerätes 2.

In den Fig. 6 und 7 sind schematisch Details eines magnetisch-induktiven Durchflussmessgeräts (MID) dargestellt, das ein Beispiel für ein Messgerät 2 ist. In einem MID wird ein Messprinzip realisiert, das auf der Trennung bewegter Ladungen in einem Magnetfeld beruht. Die messtechnische Grundlage bildet ein Messrohr aus einem nichtmagnetischen Werkstoff, beispielsweise aus einem nichtmagnetischen Metall, das auf der Strömungsseite durch eine isolierende Auskleidung elektrisch von dem Messfluid isoliert ist, und das von einem durch die Spulen der Magnetkreisvorrichtung erzeugten Magnetfeld senkrecht zur Strömungsrichtung durchsetzt ist. Wird das Messrohr von einem Messfluid mit einer elektrischen Mindestleitfähigkeit durchflossen, so erfahren die in dem leitfähigen Messfluid vorhandenen Ladungsträger durch das Magnetfeld eine Ablenkung. An senkrecht zum Magnetfeld und zur Strömungsrichtung angeordneten Messelektroden entsteht durch die Ladungstrennung eine Spannung, die mit einem Messgerät erfasst und als Messspannung ausgewertet wird. Da die gemessene Spannung proportional zur Strömungsgeschwindigkeit der mit dem Messfluid bewegten Ladungsträger ist, kann aus der Strömungsgeschwindigkeit auf den Durchfluss im Messrohr geschlossen werden.

Zur Überprüfung eines MIDs als Messgerät 2 zeigt die Fig. 6 eine Variante zur Überprüfung des Stromes, der über die Spulen das Magnetfeld erzeugt, und die Fig. 7 zeigt eine Ausgestaltung zur Überwachung der Verarbeitung der elektrischen Spannung, die von den Elektroden abgegriffen wird. Diese beiden Abbildungen zeigen Ausgestaltungen, die es erlauben, in das Messgerät 2 einzugreifen und dadurch einzelne Komponenten davon auszutesten.

In der Fig. 6 ist ein Teil eines MIDs dargestellt, mit einer ersten Spule 10 und einer zweiten Spule 11 zur Erzeugung des Magnetfelds und einem Mittelabgriff 12 zwischen den Spulen 10, 11. Die Spulen 10, 11 haben dabei jeweils einen komplexen Widerstand R_{S1} bzw. R_{S2}. Eingetragen sind drei Signaleingänge E7, E8 und E9, wobei zwischen E7 und E9, d. h. über den Mittelabgriff 12 der Strom I₇ und zwischen E9 und E8 der Strom I₈ fließt. Die Ströme I₇ und I₈ lassen sich während einer Überprüfung des Messgerätes passend einstellen. Weiterhin befindet sich zwischen dem Eingang E7 und der ersten Spule 10 ein Prüfwiderstand R_{P7} und zwischen dem Eingang E8 und der zweiten Spule 11 der Widerstand R_{P8}. Schematisch ist weiterhin ein Stecker 13 dargestellt, über den die entsprechenden Spannungen abgreifbar sind. Zwischen den Widerständen R_{P7}, R_{P8}, R_{S1} und R_{S2}, den Strömen I₇ und I₈ und den gemessenen Spannungen U_{P7}, U_{P8}, U₇ und U₈ bestehen dabei prinzipiell folgende Zusammenhänge: I₇ = U_{P7} / R_{P7}; I₈ = U_{P8} / R_{P8}; R_{S1} = U₇ / I₇ und R_{S2} = U₈ / I₈.

In der Ausgestaltung der Fig. 7, die schematisch einen Teil einer Schaltung darstellt, sind wieder drei Eingänge E1, E2, E3 und drei Signalausgänge A1, A2, A3 vorgesehen, wobei die Eingänge E1, E2, E3 in Richtung des eigentlichen Sensors bzw. hier speziell in Richtung der - hier nicht dargestellten - Elektroden zum Abgriff der Signale liegen. Zwischen E1 und A1 befindet sich ein Prüfwiederstand R_{P1} und davor ein Buffer B1. Zwischen E2 und A2 befindet sich ein zweiter Prüfwiderstand R_{P2} und ein zweiter Buffer B2. Wieder ist ein Stecker 13 zur Anbindung des Prüfgerätes angedeutet. Zwischen der Verbindung zwischen E2 und A2 und der Verbindung zwischen E3 und A3 lässt sich die Prüfspannung U_{P2} abgreifen. Zwischen der Verbindung zwischen E1 und A1 und der Verbindung zwischen E3 und A3 kann die Prüfspannung U_{P3} abgegriffen werden. Die beiden Prüfspannungen U_{P2}, U_{P3} sind mittels der Steuerung der Elektrodenspannungen - d. h. die Spannungen, die sich von E1, E2 und E3 abgreifen lassen - während einer Prüfphase des MIDs vorgebbar, wodurch die den Elektroden nachgeordneten Elektronik- oder Auswertekomponenten - hier folgend auf die Ausgänge A1, A2 und A3 - überprüfbar sind. Die Buffer B1, B2 verhindern eine Störung der - nicht dargestellten - Elektroden im Sensor, und die Widerstände R_{P1} und R_{P2} dienen im Wesentlichen nur dem Schutz der Buffer B1, B2.

Die Fig. 8 zeigt schematisch ein Flussdiagramm einer Ausgestaltung des erfindungsgemäßen Verfahrens. Das Verfahren soll dabei angewendet werden auf eine Messgerätanordnung, wie sie in der Fig. 1 exemplarisch dargestellt ist. In einem ersten Schritt 101 ermittelt das Messgerät einen aktuellen Wert der Messgröße und erzeugt damit ein Messsignal. Während der hier aufgelisteten Schritte der Überprüfung des Messgerätes greift im Schritt 102 das Prüfgerät in das Messgerät ein und bewirkt dadurch, dass ein Testsignal als Ausgangssignal erzeugt wird. Dabei ist das Testsignal insbesondere vorteilhafterweise unterschiedlich zum Messsignal. Das Testsignal entspricht beispielweise einem maximalen Durchfluss durch das Sensorelement, während in Wirklichkeit der Durchfluss des Messmediums im normalen Bereich liegt. Im Schritt 103 gibt das Messgerät an seinem Signalausgang das Testsignal als Ausgangssignal aus. Im nächsten Schritt 104 wirkt das Prüfgerät über das Steuerelement auf den Signalweg hinter dem Signalausgang des Messgerätes ein und bewirkt damit, dass das an der Abgreifstelle abgreifbare Abgriffsignal ein vorgebbares Abgriffsignal ist, das sich insbesondere vom Testsignal bzw. vom zeitlichen Verlauf des Testsignals unterscheidet. In einer Ausgestaltung wird das Testsignal derartig korrigiert, dass das Abgriffsignal im Wesentlichen gleich dem Messsignal ist. In diesem Fall lässt sich während der Überprüfung des Messgerätes noch das richtige Messsignal abgreifen. In einer Ausgestaltung speichert hierfür das Prüfgerät das Messsignal ab und korrigiert über das Steuerelement das Ausgangssignal so lange, bis es dem Messsignal entspricht.

In einer anderen Ausgestaltung ist das Abgriffsignal für einen Zeitraum, der insbesondere der Dauer der Überprüfung entspricht, im Wesentlichen gleich einem konstanten Wert. Die Auswertung des als Testsignal ausgestalteten Ausgangssignals in Bezug auf die Überprüfung des Messgeräts erfolgt in einer Ausgestaltung vorzugsweise ebenfalls über das Prüfgerät, das ggf. auswertet, um welches Maß das Ausgangssignal kompensiert werden muss, bis das Messsignal bzw. bis der konstante, vorgebbare Wert sich als Abgriffsignal einstellt. Nach dem Schritt 104 wird in einer Ausgestaltung die Überprüfung beendet und das Ergebnis beispielsweise an eine übergeordnete Einheit übermittelt. Alternativ wird der Ablauf erneut durchlaufen, um ggf. ein anderes Testsignal zu erzeugen.

## Patentansprüche

1. Verfahren zum Prüfen einer Messgerätanordnung (1), wobei die Messgerätanordnung (1) mindestens ein Messgerät (2) umfasst, und wobei das Messgerät (2) ausgehend von der Bestimmung mindestens einer Messgröße mindestens ein von einer Abgreifstelle (3) als Abgriffsignal abgreifbares Ausgangssignal erzeugt, wobei derartig auf das Messgerät (2) eingewirkt wird, dass das Messgerät (2) ein Testsignal als Ausgangssignal erzeugt, und wobei über ein Steuerelement (4) das Ausgangssignal und/oder ein davon abhängiges Signal derartig beeinflusst werden/wird, dass das Abgriffsignal ein vorgebbares Einstellsignal ist,
**dadurch gekennzeichnet,**
**dass** es sich bei dem Steuerelement (4) um ein im Wesentlichen durch einen elektrischen Widerstand gekennzeichnetes Bauteil handelt und dass für die Beeinflussung des Ausgangssignals und/oder eines davon abhängigen Signals eine elektrische Spannung verändert wird, die an dem Steuerelement (4) anliegt.

2. Verfahren nach Anspruch 1, **dadurch gekennzeichnet, dass** vor und/oder während des Einwirkens auf das Messgerät (2) ein aktueller Wert der Messgröße bestimmt und ein Messsignal erzeugt wird und dass das Ausgangssignal und/oder ein davon abhängiges Signal derartig beeinflusst werden/wird, dass das Abgriffsignal im Wesentlichen gleich dem Messsignal ist.

3. Verfahren nach Anspruch 1, **dadurch gekennzeichnet, dass** das Ausgangssignal und/oder ein davon abhängiges Signal derartig beeinflusst werden/wird, dass das Abgriffsignal während eines vorgebbaren Prüfzeitraums im Wesentlichen gleich einem vorgebbaren konstanten Wert ist.

## Claims

1. Method for testing of a measuring device arrangement (1), wherein the measuring device arrangement (1) comprises at least one measuring device (2), and wherein the measuring device (2), based on the determination of at least one measured quantity, generates at least one output signal which can be tapped from a pick-off site (3) as a pick-off signal, wherein an action is applied to the measuring device (2) such that the measuring device (2) generates a test signal as the output signal and wherein the output signal and/or a signal dependent thereon is influenced via a control element (4) such that the pick-off signal is a definable setting signal
**characterized in**
**that** the the control element (4) is a component which is identified essentially by an electrical resistance and that for influencing the output signal and/or a signal dependent thereon an electrical voltage applied to the control element (4) is changed.

2. The method according to claim 1, **characterized in that** before and/or during the action on the measuring device (2), a current value of the measured quantity is determined and a measurement signal is produced, and **in that** the output signal and/or a signal dependent thereon is influenced such that the pick-off signal is essentially identical to the measurement signal.

3. The method according to claim 1, **characterized in that** the output signal and/or a signal dependent thereon is influenced such that, during a definable test time interval, the pick-off signal is essentially identical to a definable constant value.

## Revendications

1. Procédé de vérification d'un agencement d'appareil de mesure (1), l'agencement d'appareil de mesure (1) comprenant au moins un appareil de mesure (2), et l'appareil de mesure (2) générant, à partir de la détermination d'au moins une grandeur de mesure, au moins un signal de sortie pouvant être saisi depuis un point de saisie (3) en tant que signal de saisie, une intervention étant effectuée sur l'appareil de mesure (2) de telle sorte que l'appareil de mesure (2) génère un signal de test en tant que signal de sortie, et le signal de sortie et/ou un signal dépendant de celui-ci étant influencé(s) par le biais d'un élément de commande (4) de telle sorte que le signal de saisie soit un signal d'ajustement prédéfinissable,
**caractérisé en ce que**
l'élément de commande (4) est un composant essentiellement **caractérisé par** une résistance électrique et en ce qu'une tension électrique est modifiée pour influencer le signal de sortie et/ou un signal dépendant de celui-ci, laquelle s'applique à l'élément de commande (4).

2. Procédé selon la revendication 1, **caractérisé en ce qu'**avant et/ou pendant que l'on agit sur l'appareil de mesure (2), une valeur actuelle de la grandeur de mesure est déterminée et un signal de mesure est généré et **en ce que** le signal de sortie et/ou un signal dépendant de celui-ci est/sont influencé(s) de telle sorte que le signal de saisie soit essentiellement identique au signal de mesure.

3. Procédé selon la revendication 1, **caractérisé en ce que** le signal de sortie et/ou un signal dépendant de celui-ci est/sont influencé(s) de telle sorte que le signal de saisie soit essentiellement égal à une valeur constante prédéfinissable pendant un intervalle de temps de vérification prédéfinissable.
